# EUROPEAN PATENT SPECIFICATION

(11) **EP 1 100 733 B1**
(45) Date of publication and mention of the grant of the patent: **03.03.2004**
(21) Application number: 99934946.7
(22) Date of filing: 23.07.1999
(51) Int. Cl.: B65D 90/62, B65G 69/18

(54) **APPARATUS FOR SECURING AN OBTURATING DEVICE OF AN OUTLET OF A CONTAINER FOR BULK MATERIAL**
VORRICHTUNG ZUM FESTHALTEN EINES VERSCHLUSSES EINES AUSGANGS EINES BEHÄLTERS FÜR SCHÜTTGUT
APPAREIL POUR FIXER UN OBTURATEUR DE SORTIE DE RECIPIENT POUR MATIERE EN VRAC

(30) Priority: 28.07.1998 GB 9816449
(43) Date of publication of application: 23.05.2001
(73) Proprietor: MATCON LIMITED, Moreton-in-Marsh, Gloucestershire GL56 0HJ (GB)
(72) Inventor: PIEPEREIT, Edward, Moreton-in-Marsh, Glos. GL56 0NN (GB)
(74) Representative: Evans, Claire
(86) International application number: PCT/GB1999/002396
(87) International publication number: WO 2000/006469

(56) References cited:
- WO-A-90/08724
- DE-C- 3 718 428

## Description

The invention relates to material handling apparatus, particularly to an intermediate bulk container, IBC, which is used to hold, transport and discharge flowable material contained therein, such as powders, granules, and particulate material in general, which could be in slurry form.

These materials are usually discharged through an outlet which is normally obturated by a closure device, usually a cone or frusto-cone which is raisable from the outlet to define an annular opening through which a desired amount of the flowable material is discharged. These closure devices, or "cone valves" are usually loosely fitted in the IBC outlet. This can be a disadvantage in some situations for example the valve can become dislodged during transit of the IBC over uneven surfaces. Also when filling the IBC the impact of say incoming powder can cause the cone valve to tilt with resulting leakage of powder onto the floor. Various devices have been proposed to combat this, both passive and active, and all have performed reasonably well, in that they limited the amount that the cone valve could tilt to an acceptable degree. However, levelling the cone valve completely is more difficult because variations in manufacture cause such valves to be at slightly different heights from one IBC to the next. Therefore proposed levelling devices are likely either not fully to reach the cone valve (and not fully level it) or can actually lift the valve off its seat. The latter is also undesirable because deposits of product sometimes remain in the IBC and would be discharged onto the floor.

In the prior art, DE-A-3718428 describes a material handling container in which springs are provided between an obturating device and its outlet in order to draw the device into a secure obturating position. However, there is no disclosure of a part according to the characterising portion of claim 1 hereinbelow.

It is accordingly an object of the invention to seek to mitigate these disadvantages.

According to a first aspect of the invention there is provided apparatus for securing an obturating device of an outlet of a container for flowable particulate material, comprising a part adapted to releasably attach to the obturating device from below in use and draw the obturating device into a secure position to obturate the outlet.

The device may be a rigid probe device. This provides for a positive levelling action.

The rigid probe device may comprise a substantially flat plate device and there may be seal means to provide a seal between the plate and the obturating device in use. This provides for a maintenance of levelling once achieved.

The seal means may be carried by the probe device. This provides for a relatively simple construction.

The seal means may comprise an inflatable seal or a lip seal.

There may be vacuum means whereby to secure the device and obturating device together. This provides for a positive levelling action too.

The plate device may comprise an upper substantially flat, circular surface, which may have a feathered perimeter. This provides for positive engagement of the plate and closure device and primary levelling of the closure device.

The probe device may be mounted on an assembly which may compress the seal means of the cone valve, which thereby improves sealing and plugs the valve in place making it less likely to become dislodged after removal. This enhances the securing or levelling action, particularly where the assembly may comprise a compression spring assembly.

There may be means to detect levelness. This allows an operator to know the status of a levelling operation, particularly where the detection means may comprise electrical and/or electronic means such as a micro switch, or micro switches.

The assembly may alternatively or in addition comprise a piston and cylinder arrangement. This provides a relatively simple mechanical arrangement.

The piston an cylinder arrangement may be pneumatic.

In either embodiment, the assembly also provides for drawing the obturating device into a substantially level attitude.

According to a second aspect of the invention there is provided material handling apparatus including apparatus as hereinbefore defined.

Apparatus for securing an obturating device of an outlet of a container for flowable material is hereinafter described, by way of example, with reference to the accompanying drawings.
Fig. 1 is a schematic sectional view of a first embodiment of apparatus according to the invention, the obturating device being fully lowered and levelled;
Fig. 2 shows a schematic sectional view of a second embodiment of apparatus according to the invention, the obturating device being tilted; and
Fig. 3 shows a view similar to that of Fig. 2, the obturating device being lowered and levelled.

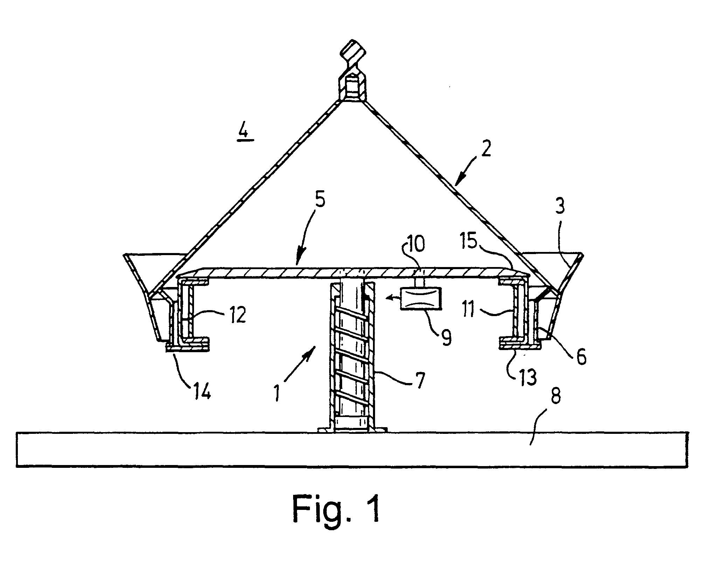

Referring to the drawings, in which like parts are indicated by like reference numerals, there is shown in Fig. 1 apparatus 1 which is for securing by levelling an obturating device 2 in the form of a cone valve for obturating an outlet 3 of a container 4, such as an IBC, for flowable particulate material, comprising a device 5 adapted to contact the cone valve 2 from below in use and draw it into a substantially level attitude.

The cone valve 2 has a depending generally cylindrical wall 6 which holds a cone seal (not shown). The levelling device 5 in the embodiment of Fig.1 is a rigid probe device which is a substantially flat, circular plate mounted on an assembly in the form of a compression spring 7 which itself is mounted on a support or base 8. The device 5 is thus spring loaded, and it has a means to generate a vacuum between the plate 5 and the cone valve 2 in the form of a vacuum generator 9 which is in communication with the space below the cone valve 2 via an orifice 10.

There is a depending peripheral cylindrical wall 11 which supports an annular seal means in the form of an inflatable seal 12, which is shown deflated in Fig. 1. The wall 11 also supports a lower, as viewed, annular plate 13 which provides the levelling action against the under-edge of cylindrical wall 6 and which supports sensor means in the form in the embodiment of micro-switches 14 at opposite sides of the outlet 3. The plate 5 has a feathered perimeter 15.

In use, to level the cone valve 2, the IBC 4 is positioned over the rigid plate 5 and the seal means 12 is inflated. The vacuum generator 9 now generates a vacuum in the space below the cone valve 2 and above the rigid plate 5, thereby drawing the cone valve 2 down onto the annular plate 13 providing the levelled condition, the compression spring 7 providing an adequate down force to the levelled cone valve 2. The compression spring assembly 7 also constrains the plate 5 to move vertically whilst remaining level, hence maintaining the cone valve 2 in a fully level attitude. The micro-switches 14 allow an operator to monitor the attitude and to check that levelling is fully complete.

It will be understood that instead of the inflatable seal 12, there may be a passive seal such as a lip seal.

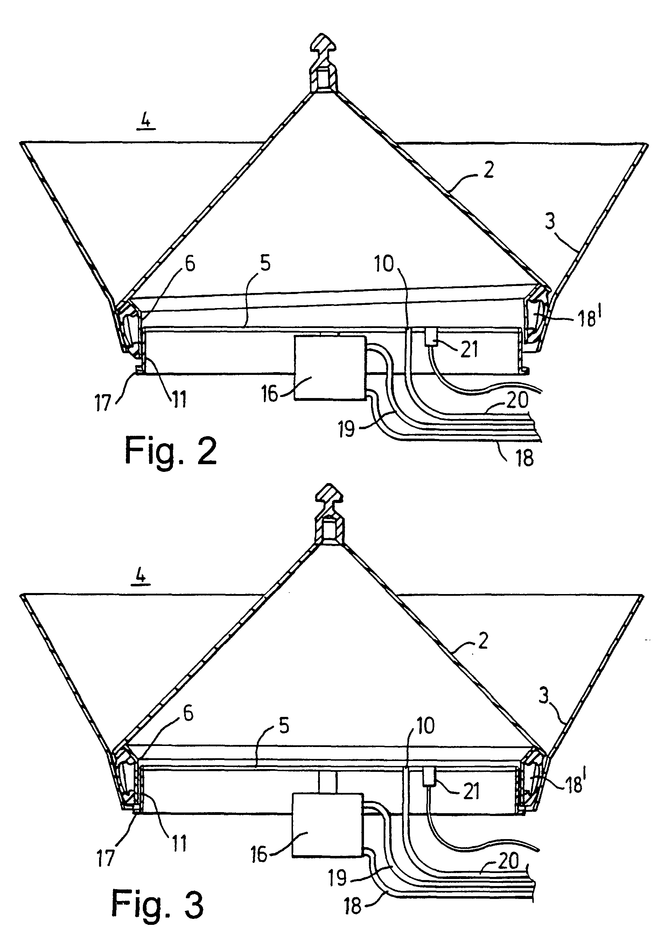

In the alternative embodiment shown in Figs. 2 and 3, there is in place of the compression spring assembly 7 a piston and cylinder assembly 16 there being a seal 17 on the wall 11 and a cone seal 18 (which is not shown in Fig. 1). There are pneumatic or hydraulic lines 18, 19 to raise and lower the cylinder 16 and a vacuum line 20, from a vacuum generator (not shown) and a vacuum detector 21.

In operation of the second embodiment, the cylinder 16 has sufficient force but a heavily restricted flow rate to cause the plate 5 to rise very slowly up to the cone valve, the seal 17 contacting the bottom of the wall 6 of the cone valve 2 to provide the final levelling of the cone valve. Simultaneously, a vacuum is applied above the plate 5 and below the cone valve 2. As this cone valve 2 becomes fully level, the seal 17 makes full circumferential contact with the cone valve 2. Before the cone valve 2 is lifted from the outlet, the vacuum detection switch 21 is operative to prevent further lifting of the cylinder 16, which is now used to exert a downward force to pull the cone valve 2 firmly into its seat, fully level and sealed.

It will be understood that the apparatus described herein may be used for applications other than in IBCs. Thus it may be used to secure a cone valve closed in a rotatable blender during rotation. In this application the pull down force of the assembly is higher, the assembly being rigidly mounted in this case. The weight of product imposes high forces on the cone valve which help secure it in position.

The embodiments described with reference to the drawings thus provide for securing and/or levelling of the cone valve without lifting the cone valve.

## Claims

1. Apparatus (1) for securing an obturating device (2) of an outlet (3) of a container (4) for flowable particulate material, **characterised by** a part (5) adapted to releasably attach to the obturating device (2) from below in use and draw the obturating device into a secure position to obturate the outlet (3).

2. Apparatus according to claim 1, the part (5) being a rigid probe device.

3. Apparatus according to claim 1 or claim 2, the rigid probe device (5) comprising a substantially flat plate device and there being seal means (12) to provide a seal between the plate and the obturating device (2) in use.

4. Apparatus according to claim 3, the seal means (12) comprising an inflatable seal.

5. Apparatus according to claim 3, the seal means (12) comprising a lip seal.

6. Apparatus according to any of claims 3 to 5, the seal means (12) being carried by the probe device (5).

7. Apparatus according to claim 6, there being vacuum means (9) whereby to secure the device (5) and obturating device (2) together.

8. Apparatus according to any of claims 3 to 7, the device (5) comprising an upper substantially flat, circular surface.

9. Apparatus according to claim 8, the peripheral edge (15) of the plate comprising a feathered edge.

10. Apparatus according to any of claims 2 to 9, the probe device (5) being mounted on an assembly (7) which draws the probe device downwardly whereby to improve securing of the obturating device in the outlet.

11. Apparatus according to claim 10, the assembly (7) comprising a compression spring assembly.

12. Apparatus according to claim 10, the assembly comprising a piston and cylinder arrangement (16).

13. Apparatus according to any preceding claim, the assembly (7,16) being adapted to draw the obturating device into a substantially level attitude.

14. Apparatus according to claim 13, including means (14) to detect levelness.

15. Apparatus according to claim 12, the detection means (14) comprising electrical and/or electronic means.

16. Apparatus according to claim 13, the electrical and/or electronic means comprising a micro switch.

17. Apparatus according to claim 16, the piston and cylinder arrangement (16) being pneumatic.

18. Material handling apparatus, including apparatus (1) according to any preceding claim.

## Patentansprüche

1. Vorrichtung (1) zum Sichern einer Absperreinrichtung (2) eines Auslasses (3) eines Behälters (4) für fließfähiges partikelförmiges Material, **gekennzeichnet durch** ein Teil (5), das dazu ausgelegt ist, an der Absperreinrichtung (2) im Gebrauch von unten lösbar angebracht zu werden und die Absperreinrichtung in eine sichere Position zu ziehen, um den Auslass (3) abzusperren.

2. Vorrichtung nach Anspruch 1, wobei das' Teil (5) eine starre Sondeneinrichtung ist.

3. Vorrichtung nach Anspruch 1 oder 2, wobei die starre Sondeneinrichtung (5) eine im wesentlichen flache Platteneinrichtung aufweist, wobei eine Dichtungseinrichtung (12) vorgesehen ist, um eine Dichtung zwischen der Platte und der Absperreinrichtung (2) im Gebrauch bereitzustellen.

4. Vorrichtung nach Anspruch 3, wobei die Dichtungseinrichtung (12) eine aufblasbare Dichtung umfasst.

5. Vorrichtung nach Anspruch 3, wobei die Dichtungseinrichtung (12) eine Lippendichtung umfasst.

6. Vorrichtung nach einem der Ansprüche 3 bis 5, wobei die Dichtungseinrichtung (12) durch die Sondeneinrichtung (5) getragen ist.

7. Vorrichtung nach Anspruch 6, wobei eine Unterdruckeinrichtung (9) vorgesehen ist, um die Einrichtung (5) und die Absperreinrichtung (12) gemeinsam zu sichern.

8. Vorrichtung nach einem der Ansprüche 3 bis 7, wobei die Einrichtung (5) eine obere im wesentlichen flache Kreisfläche aufweist.

9. Vorrichtung nach Anspruch 8, wobei der Umfangsrand (15) der Platte einen Ausziehrand aufweist.

10. Vorrichtung nach einem der Ansprüche 2 bis 9, wobei die Sondeneinrichtung (5) an dem Aufbau (7) angebracht ist, der die Sondeneinrichtung einwärts zieht, um die Sicherung der Absperreinrichtung in dem Auslass zu verbessern.

11. Vorrichtung nach Anspruch 10, wobei der Aufbau (7) einen Druckfederaufbau umfasst.

12. Vorrichtung nach Anspruch 10, wobei der Aufbau eine Kolben-Zylinder-Anordnung (16) umfasst.

13. Vorrichtung nach einem der vorangehenden Ansprüche, wobei der Aufbau (7, 16) dazu ausgelegt ist, die Absperreinrichtung in eine im wesentlichen nevellierte Stellung zu ziehen.

14. Vorrichtung nach Anspruch 13, aufweisend eine Einrichtung (14) zur Ermittlung der Nevellierung.

15. Vorrichtung nach Anspruch 12, wobei die Ermittlungseinrichtung (14) eine elektrische und/oder elektronische Einrichtung umfasst.

16. Vorrichtung nach Anspruch 13, wobei die elektrische und/oder elektronische Einrichtung einen Mikroschalter umfasst.

17. Vorrichtung nach Anspruch 16, wobei die Kolben-/Zylinderanordnung (16) pneumatisch ist.

18. Materialhandhabungsvorrichtung, aufweisend eine Vorrichtung (1) nach einem der vorangehenden Ansprüche.

## Revendications

1. Appareil (1) de fixation d'un dispositif d'obturation (2) sur la sortie (3) d'un conteneur (4) de matériau à base de particules liquides et se composant d'un élément (5) adapté pour se rattacher et se détacher du dispositif d'obturation (2) par en dessous pendant l'utilisation et pour amener ce dispositif de fixation sur une position fixe de façon à obturer la sortie (3).

2. Appareil conforme à l'affirmation (1) et dont l'élément (5) est en fait une sonde rigide.

3. Appareil conforme à l'affirmation 1 ou 2 et dont la sonde rigide (5) comporte une plaquette essentiellement plate et avec insertion d'un composant d'étanchéité (12) permettant de garantir une étanchéité entre cette plaquette et le dispositif d'obturation (2) durant l'utilisation.

4. Appareil conforme à l'affirmation 3 et dont le composant d'étanchéité (12) se compose d'un joint gonflable.

5. Appareil conforme à l'affirmation 3 et dont le composant d'étanchéité (12) se compose d'un joint à lèvre.

6. Appareil conforme à l'une des affirmations 3 à 5 et dont le composant d'étanchéité (12) est soutenu par la sonde rigide (5).

7. Appareil conforme à l'affirmation 6 et comportant un dispositif de mise sous vide (9) permettant de rattacher l'un à l'autre le dispositif (5) et le dispositif d'obturation (2).

8. Appareil conforme à l'une des affirmations 3 à 7 et dont le dispositif (5) comporte une surface supérieure circulaire et essentiellement plate.

9. Appareil conforme à l'affirmation 8 et dont le bord périphérique (15) de la plaquette est biseauté.

10. Appareil conforme à l'une des affirmations 2 à 9 et dont la sonde (5) vient se fixer sur un ensemble (7) qui tire la sonde vers le bas afin d'améliorer la fixation du dispositif d'obturation dans la sortie.

11. Appareil conforme à l'affirmation 10 et dont l'ensemble (7) comporte un ensemble ressort de compression.

12. Appareil conforme à l'affirmation et dont l'ensemble se compose d'un agencement à piston et cylindre (16).

13. Appareil conforme à l'une des affirmations précédentes et dont l'ensemble (7, 16) est adapté pour tirer le dispositif d'obturation afin de lui donner une position essentiellement horizontale.

14. Appareil conforme à l'affirmation 13 et comportant un dispositif (14) de détection de l'horizontalité.

15. Appareil conforme à l'affirmation 12 et dont le dispositif de détection (14) comporte un dispositif électrique et (ou) électronique.

16. Appareil conforme à l'affirmation 13 et dont le dispositif électrique et (ou) électronique comporte un micro-rupteur.

17. Appareil conforme à l'affirmation 16 et dont l'agencement piston et cylindre ( 15) est pneumatique.

18. Appareil de manutention de matériau, y compris l'appareil (1), conforme à l'une des affirmations précédentes.
